# EUROPÄISCHE PATENTSCHRIFT

(11) **EP 3 597 488 B1**
(45) Veröffentlichungstag und Bekanntmachung des Hinweises auf die Patenterteilung: **03.08.2022**
(21) Anmeldenummer: 19180869.0
(22) Anmeldetag: 18.06.2019
(51) Int. Cl.: B60R 16/027, B60R 16/037, H02G 11/00, B60N 2/08, B60N 2/02

(54) **KRAFTFAHRZEUG MIT ARRETIER- UND KONTAKTIERUNGSSYSTEM ZUM ELEKTRISCHEN VERBINDEN EINES BORDNETZES EINES KRAFTFAHRZEUGS MIT EINEM ENTNEHMBAREN FAHRZEUGSITZ ODER EINER SITZANLAGE**
MOTOR VEHICLE WITH LOCKING AND CONTACTING SYSTEM FOR ELECTRICALLY CONNECTING AN ON-BOARD POWER SUPPLY NETWORK OF A VEHICLE WITH A REMOVABLE VEHICLE SEAT OR A SEAT SYSTEM
VÉHICULE AUTOMOBILE AVEC SYSTÈME DE BLOCAGE ET DE CONTACT PERMETTANT DE RACCORDER ÉLECTRIQUEMENT UN RÉSEAU DE BORD D'UN VÉHICULE AUTOMOBILE À UN SIÈGE DE VÉHICULE AMOVIBLE OU UNE INSTALLATION DE SIÈGE

(30) Priorität: 04.07.2018 DE 102018211055
(43) Veröffentlichungstag der Anmeldung: 22.01.2020
(73) Patentinhaber: Magna Seating (Germany) GmbH, 63877 Sailauf (DE)
(72) Erfinder: SONAR, Sachin, 63739 Aschaffenburg (DE)
(74) Vertreter: Völger, Silke Beatrix

(56) Entgegenhaltungen:
- EP-A2- 2 298 609
- DE-A1-102009 030 335

## Beschreibung

Die vorliegende Erfindung betrifft ein Kraftfahrzeug mit Arretier- und Kontaktierungssystem zum elektrischen Verbinden eines Bordnetzes des Kraftfahrzeugs mit einem entnehmbaren Fahrzeugsitz oder einer Sitzanlage

Fahrzeugsitze für Fahrer und Beifahrer sind zur Einstellung einer optimalen Sitzposition längsverschieblich über ein Schienensystem, welches zwei parallel verlaufende

Sitzschienenpaare umfasst, auf dem Kraftfahrzeugboden angeordnet. Die Position des Sitzes ist über die im Bereich der Sitzschienenpaare angeordneten Verriegelungsmittel arretierbar, wobei die Arretierung über Betätigungshebel von einem Insassen aufgehoben und der Sitz längs der fahrzeugseitigen Schiene verschoben werden kann.

Zur Vergrößerung der Ladefläche ist es weiterhin bekannt diese längsverschieblich angebundenen Fahrzeugsitze insbesondere der 2. und 3. Sitzreihe lösbar mit dem Fahrzeugboden zu verbinden. Ein derartiges Befestigungssystem von Fahrzeugsitzen ist beispielsweise aus der EP 0 949 111 B1 bekannt. Dieses modulare Befestigungssystem weist eine Nockensteuerung für eine Verschiebung des Kraftfahrzeugsitzes in Längsrichtung und eine Arretierung des Sitzes in der eingestellten Position auf. Ein mittels eines Betätigungshebels betätigbarer Steuernocken bewirkt ein Verschwenken von Verriegelungsmitteln. Hierdurch kann ein Arretieren des Fahrzeugsitzes in den Schienen, ein Lösen des Fahrzeugsitzes zwecks Längsverschiebung, sowie eine Position der Bauteile des Befestigungssystems eingestellt werden, in der ein Herausnehmen des Kraftfahrzeugsitzes möglich ist.

Zusätzlich sind Kraftfahrzeugsitze häufig mit Funktionen ausgestattet, die eine elektrische Verbindung mit dem Bordnetz des Kraftfahrzeugs benötigen (siehe EP2298609). Eine derartige Funktion ist beispielsweise eine Sitzheizung oder eine elektrische Einstellbarkeit der Sitzhöhe und Sitztiefe. Bei entnehmbaren Kraftfahrzeugsitzen muss diese elektrische Verbindung ebenfalls lösbar und im Falle des Wiedereinsetzens des Kraftfahrzeugsitzes muss eine sichere Kontaktierung der elektrischen Verbindung einfach wieder herstellbar sein. Dies ist insbesondere dann schwierig und konstruktiv aufwändig, wenn der Kraftfahrzeugsitz längsverschieblich am Fahrzeugboden angebunden ist und derart konzipiert ist, dass der Sitz an jeder Position längs des Schienensystems entnommen und wiedereingesetzt werden kann. Hier muss sichergestellt werden, dass in jeder Position des Kraftfahrzeugsitzes längs der Bodenschiene eine Kontaktierung zwischen fahrzeugseitiger Stromversorgung und Kraftfahrzeugsitz möglich ist.

Aufgabe der vorliegenden Erfindung ist es daher ein Kraftfahrzeug mit Arretier- Kontaktierungssystem zum elektrischen Verbinden eines Bordnetzes des Kraftfahrzeugs mit einem arretierbaren, entnehmbaren und längs verschieblichen Fahrzeugsitz derart weiterzubilden, dass es konstruktiv einfach aufgebaut ist, und dass sowohl beim Einsetzen als auch nach einem Längsverschieben eines Kraftfahrzeugsitzes in jeder Position eine elektrische Verbindung schnell und selbsttätig d.h. ohne zusätzliche Bedienung durch einen Nutzer möglich ist.

Diese Aufgabe löst die vorliegende Erfindung durch ein Kraftfahrzeug mit Arretier- und Kontaktierungssystem zum elektrischen Verbinden eines Bordnetzes des Kraftfahrzeugs mit einem arretierbaren, entnehmbaren und längs verschieblichen Fahrzeugsitz mit den Merkmalen des Anspruch 1.

Durch das erfindungsgemäße Kraftfahrzeug mit Arretier- und Kontaktierungssystem zum elektrischen Verbinden eines Bordnetzes des Kraftfahrzeugs mit einem entnehmbaren Sitz ist ein automatisches Kontaktieren des Kraftfahrzeugsitzes beim Einsetzen des Kraftfahrzeugsitzes an jeder beliebigen Position längs der Sitzschiene möglich. Auch ein Entnehmen des Kraftfahrzeugsitzes ist dementsprechend an jeder Position längs des Schienensystems möglich. Der Nutzer selbst bemerkt dabei keinen Unterschied zu einem herkömmlichen (ohne elektrische Verbindung) entnehmbaren Sitz.

Die Kontaktierung wird hierbei über verschwenkbar angebundene Kontaktierelementebeim Einsetzen des Kraftfahrzeugsitzes bewirkt.

Bei der Kontaktierung des Kraftfahrzeugsitzes mit dem Bordnetz kann sowohl mindestens eine Verbindung mit der Stromversorgung als auch mindestens eine Datenverbindung hergestellt werden.

Noch weitere vorteilhafte Ausgestaltungen der vorliegenden Erfindung sind in den Unteransprüchen angegeben.

Die Längsrichtung entspricht der x-Richtung, die Querrichtung entspricht der y-Richtung, die Hochrichtung entspricht der z-Richtung in der Beschreibung und den zugeordneten Zeichnungen.

Der Kraftfahrzeugsitz ist mit elektrischen Funktionen ausgestattet, diese können eine Vielzahl elektrischer Verbraucher wie beispielsweise eine Sitzheizung, Sitzhöhenverstellung, Sitztiefenverstellung etc. umfassen. Zur Steuerung bzw. Regelung der elektrischen Funktionen ist vorzugsweise eine Steuereinheit im Kraftfahrzeugsitz angeordnet.

Die vorliegende Erfindung wird nachfolgend anhand von Ausführungsbeispielen beschrieben, wobei auf die anhängenden Zeichnungen Bezug genommen wird. Darin zeigen:
- Fig. 1: eine perspektivische Ansicht auf einen Kraftfahrzeugsitz auf schräg hinten, welcher längsverschieblich auf einem Schienensystem angebunden ist,
- Fig. 2: eine Darstellung des Schienensystems mit Traverse zur Anbindung des Kraftfahrzeugsitzes gemäß Figur 1,
- Fig. 3: eine Seitenansicht des erfindungsgemäßen Kontaktierungssystems mit Schienensystem, welches eine Bodenschiene und eine Sitzschiene umfasst, mit Betätigungselementen zur Entnahme des Kraftfahrzeugsitzes und Betätigungselementen zum Verstellen des Kraftfahrzeugsitzes längs der Bodenschiene,
- Fig. 4a: eine perspektivische Darstellung auf ein Sitzschienenpaar mit Kontaktierungssystem in einer Situation in der der Kraftfahrzeugsitz aus der Bodenschiene herausnehmbar in der Bodenschiene gehalten ist;
- Fig. 4b: eine weitere perspektivische Ansicht der Situation gemäß Figur 4a in einer Darstellung des Kontaktierungssystems mit Arretierelementen, Gleitund Blockierelemente ohne Sitzschienenpaar

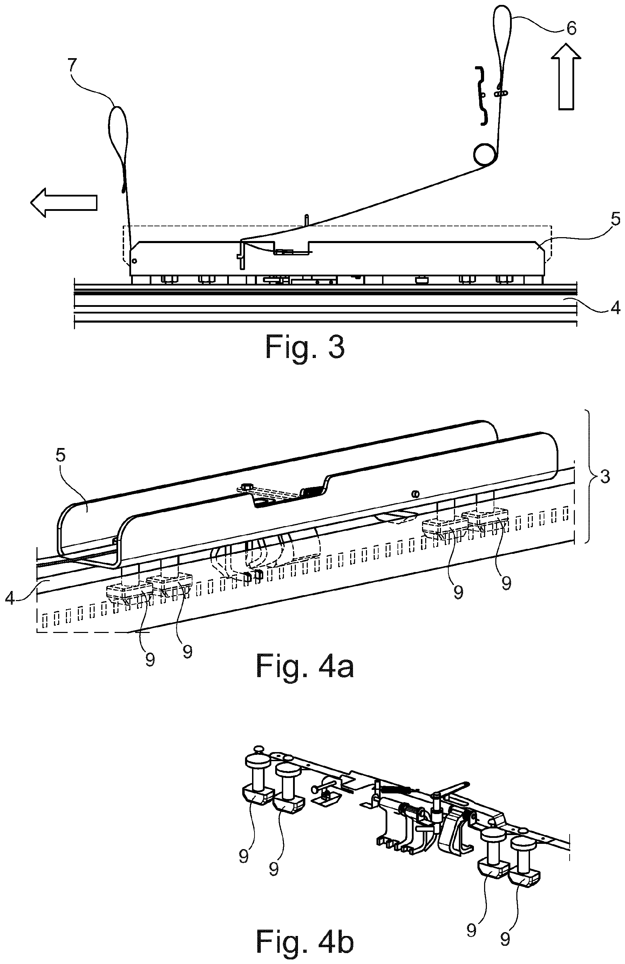

- Fig. 4a: eine perspektivische Darstellung auf ein Sitzschienenpaar mit Kontaktierungssystem in einer Situation in der der Kraftfahrzeugsitz aus der Bodenschiene herausnehmbar in der Bodenschiene gehalten ist;
- Fig. 4b: eine weitere perspektivische Ansicht der Situation gemäß Figur 4a in einer Darstellung des Arretier- und Kontaktierungssystems mit Arretierelementen, Verriegelungs- und Kontaktierungselemente ohne Sitzschienenpaar,

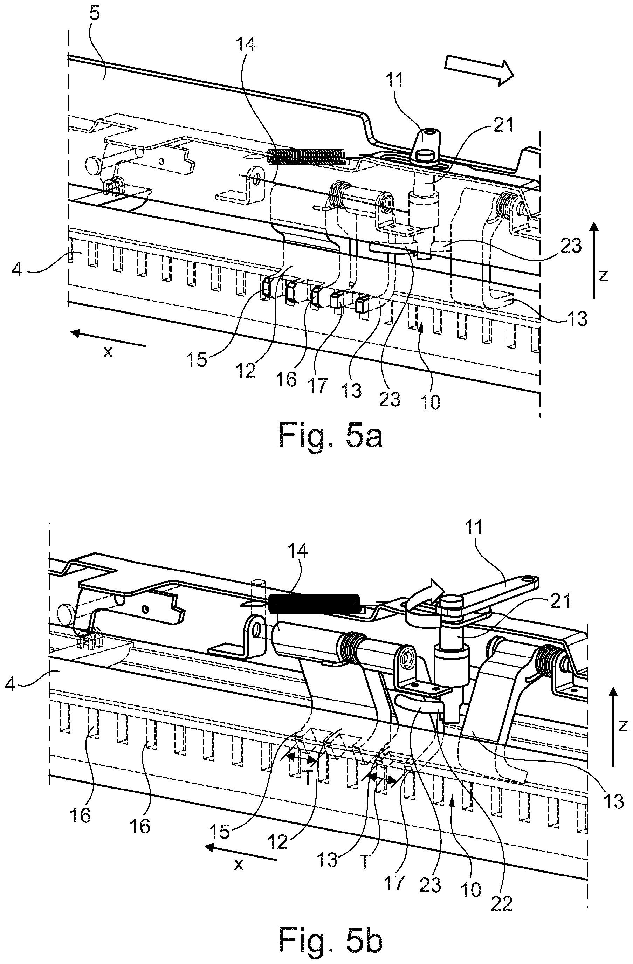

- Fig. 5a: einen vergrößerten Ausschnitt von wesentlichen Elementen des erfindungsgemäßen Arretier- und Kontaktierungssystems in einer Situation, in der der Kraftfahrzeugsitz in der Bodenschiene arretiert und kontaktiert gehalten ist,
- Fig. 5b: einen vergrößerten Ausschnitt von wesentlichen Elementen des erfindungsgemäßen Kontaktierungssystems in einer Situation in der der Kraftfahrzeugsitz in der die Arretierung und Kontaktierung in der Bodenschiene gelöst ist,

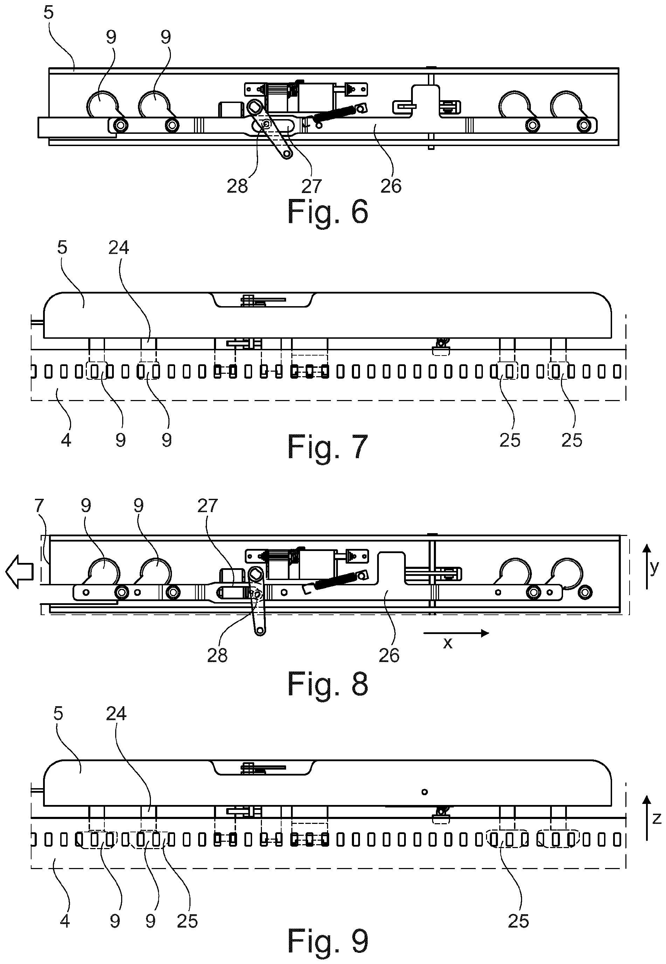

- Fig. 6: eine Draufsicht auf eine Sitzschiene mit Kontaktierungssystem in einer Situation, in der der Kraftfahrzeugsitz in der Bodenschiene arretiert und kontaktiert gehalten ist,
- Fig. 7: eine Seitenansicht der Situation gemäß Figur 6,
- Fig. 8: eine Draufsicht auf eine Sitzschiene mit Kontaktierungssystem in einer Situation, in der die Arretierung und Kontaktierung des Kraftfahrzeugsitz in der Bodenschiene gelöst ist und der Kraftfahrzeugsitz aus der Bodenschiene entnommen werden kann,
- Fig. 9: eine Seitenansicht der Situation gemäß Fig. 8,

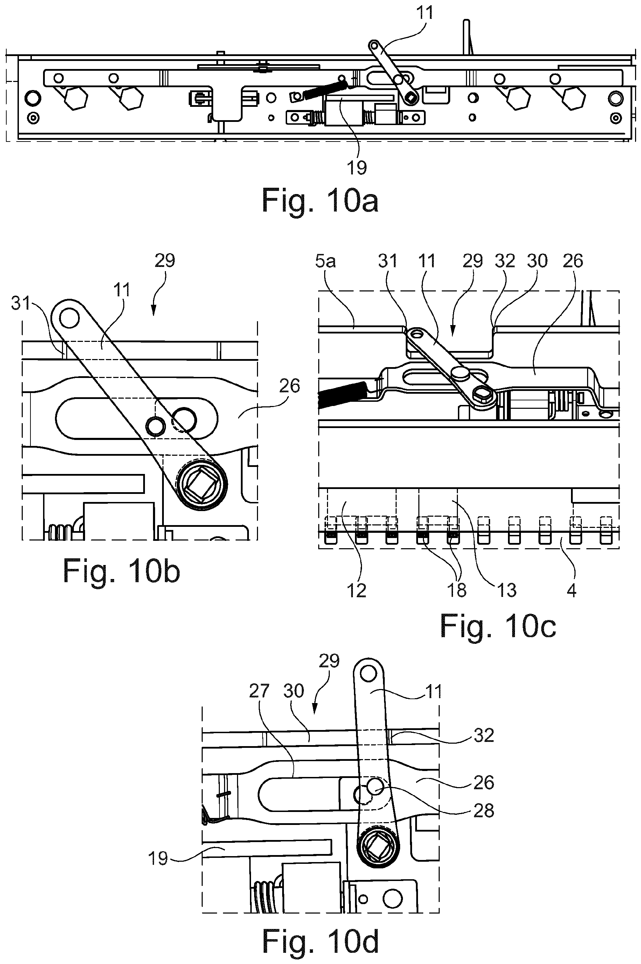

- Fig. 10a: eine Draufsicht auf die Sitzschiene mit Kontaktierungssystem mit einer Darstellung des Freigabemechanismus für die Arretierung und Kontaktierung des Kraftfahrzeugsitzes,
- Fig. 10b: einen Ausschnitt eines Hebels des Freigabemechanismus in einer ersten Position gemäß Figur 10a,
- Fig. 10c: den Ausschnitt gemäß Fig. 10b in einer perspektivischen Darstellung,
- Fig. 10d: den Ausschnitt gemäß Fig. 10b in einer zweiten Position des Hebels,

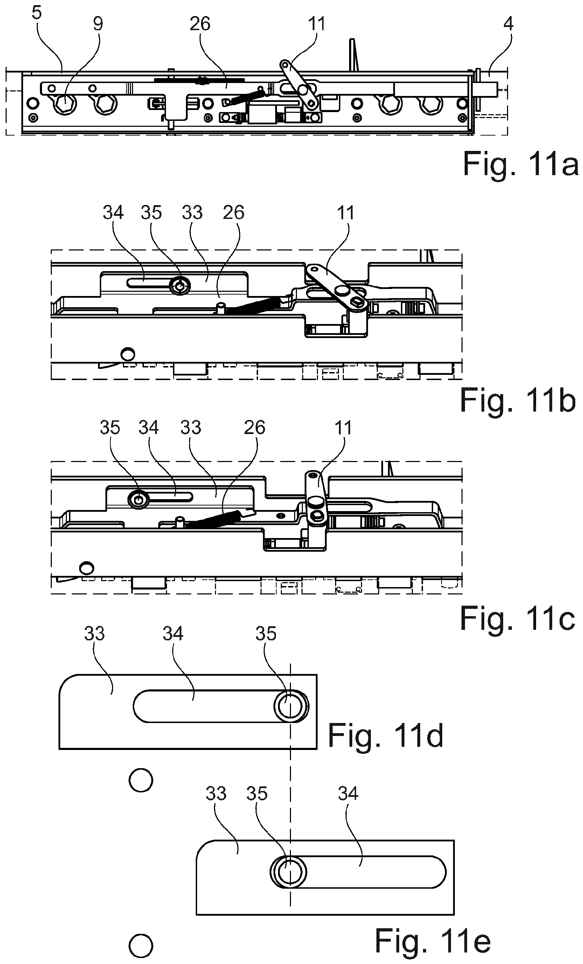

- Fig. 11a: eine Draufsicht auf die Sitzschiene mit Kontaktierungssystem mit einer Darstellung des Freigabemechanismus für die Arretierung und Kontaktierung des Kraftfahrzeugsitzes,
- Fig. 11b: einen weiteren Ausschnitt auf ein technisches Detail des Anschlags für die erste Position,
- Fig. 11c: den Ausschnitt gemäß Fig. 11b in der zweiten Position,
- Fig. 11d: ein vergrößerter Ausschnitt der Situation 11b des Anschlags in der Position der Arretierung in einer Seitenansicht,
- Fig. 11e: ein vergrößerter Ausschnitt der Situation 11c des Anschlags in der Position der Freigabe des Kraftfahrzeugsitzes zum Entnehmen in einer Seitenansicht,

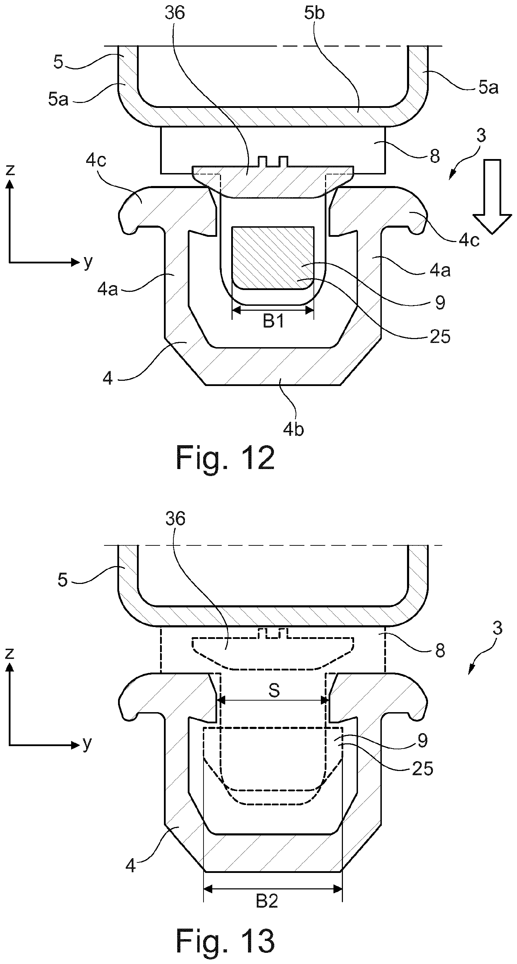

- Fig. 12: einen Querschnitt durch ein Sitzschienenpaar beim Einsetzen des Kraftfahrzeugsitzes in einer ersten Montageposition,
- Fig. 13: die Querschnittsdarstellung gemäß Figur 12 in einer zweiten Montageposition,

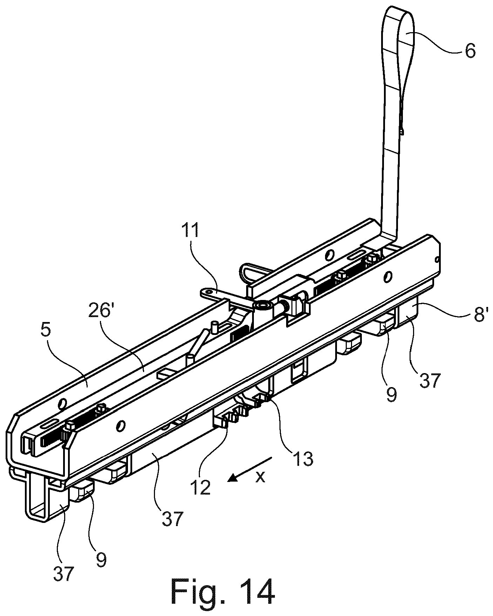

- Fig. 14: eine perspektivische Darstellung auf ein weiteres Ausführungsbeispiel einer Sitzschiene mit Kontaktierungssystem,

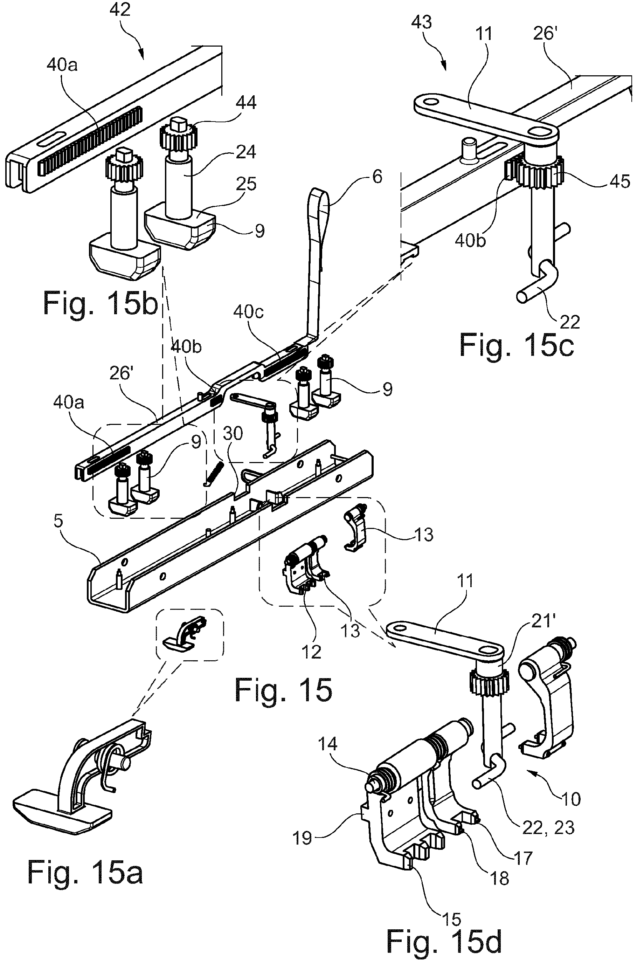

- Fig. 15: eine Explosionsdarstellung des Ausführungsbeispiels gemäß Figur 14; und
- Fig. 15a-d: vergrößerte Teilausschnitte von Einzelheiten gemäß Figur 15.

Ein Kraftfahrzeugsitz 1 der mit elektrischen Funktionen ausgestattet ist, ist über ein Schienensystem 2, welches zwei parallel verlaufende Sitzschienenpaare 3 aufweist, längsverschieblich d.h. in x-Richtung an der Fahrzeugkarosserie gelagert. Ein Sitzschienenpaar 3 weist jeweils eine fahrzeugfest d.h. an einem Bodenelement angebundene Bodenschiene 4 sowie eine an der Bodenschiene 4 längsverschieblich gelagerte am Kraftfahrzeugsitz 1 angebundene Sitzschiene 5 auf. In den Figuren 12 und 13 ist zu erkennen, dass die Sitzschienen 5 als u-Profil ausgeführt sind und Schenkel 5a sowie einen die Schenkel verbindenden Steg 5b aufweisen. Die Bodenschienen 4 sind ebenfalls als nach oben geöffnete u-Profile ausgeführt und weisen seitlich in z-Richtung sich erstreckende Schenkel 4a und eine die Schenkel 4a verbindende Basis 4b auf. An den Endbereichen der Schenkel 4a sind in Längsrichtung verlaufende und in Querrichtung sich erstreckende Führungsflächen 4c ausgeführt. Zwischen den Führungsflächen 4c verbleibt ein Einführschlitz S.

Die Position des Kraftfahrzeugsitzes 1 ist über zwischen den Bodenschienen 4 und Sitzschienen 5 wirkende Arretiereinheiten verriegelbar, wobei die Arretierung über ein erstes Betätigungselement 6 von einem Insassen aufgehoben und der Kraftfahrzeugsitz 1 (Sitz) längs der strukturfesten Bodenschienen 4 verschoben werden kann (Längsverstellposition). In der Längsverstellposition des Kraftfahrzeugsitzes 1 ist der Kraftfahrzeugsitz über Gleitelemente 8 längs der Bodenschienen 4 verschiebbar gehalten, ein Entnehmen des Sitzes in Hochrichtung (z-Richtung) wird über Verriegelungselemente 9 blockiert.

In der arretierten Position (Gebrauchsposition) ist der Kraftfahrzeugsitz 1 sowohl über die Verriegelungseinheiten arretiert gehalten als auch über Kontaktierungseinheiten elektrisch kontaktiert, d.h. es besteht eine elektrische Verbindung zwischen Kraftfahrzeugsitz bzw. im Kraftfahrzeugsitz integrierten elektrischen/elektronischen Verbrauchern und Bordnetz. Zwecks Ansteuerung der in den Sitz integrierten Funktionen ist vorteilhafterweise ebenfalls eine Verbindung zu mindestens einer Datenleitung in der Gebrauchsposition hergestellt. Die Stromversorgungsleitung kann dabei auch als Datenleitung genutzt werden.

Zur Entnahme des Kraftfahrzeugsitzes 1 aus den Bodenschienen 4 sind zwei zweite Betätigungselemente 7 vorgesehen, die jeweils im Bereich der Sitzschiene auf der Rückseite des Kraftfahrzeugsitzes 1 angeordnet und bei Betätigung durch einen Insassen sowohl die Arretierung über die Verriegelungseinheiten in Längsverstellrichtung (x-Richtung) als auch die Verriegelung über die Verriegelungselemente 9 in Entnahmerichtung (z-Richtung) aufheben, sodass der Sitz entnommen werden kann. Gleichzeitig wird durch die Betätigung der zweiten Betätigungselemente 7 die elektrische Verbindung zwischen Kraftfahrzeugsitz 1 und Bordnetz aufgehoben (Entnahmeposition). Einzelheiten hierzu werden anhand der entsprechenden weiteren Zeichnungen beschrieben.

In der Figur 3 ist in einer Seitenansicht eines Sitzschienenpaares 3 die Betätigungsrichtung der Betätigungselemente 6, 7 durch Pfeile angezeigt. Bei einer Betätigung des Betätigungselementes 6 in Richtung des Pfeils wird dabei die Längsverstellposition des Sitzes eingestellt. Bei einer Betätigung des Betätigungselementes 7 in Richtung des Pfeils wird die Entnahmeposition bewirkt. Die Betätigungselemente 6, 7 sind dem Fachmann allgemein bekannt und können Hebel, Laschen, Bowdenzüge etc. umfassen.

Die Figur 4a zeigt in einer perspektivischen Ansicht ein Sitzschienenpaar 3 einer Seite des Kraftfahrzeugsitzes 1. In der dargestellten Situation sind die Verriegelungselemente in einer entriegelten Position, d.h. der Kraftfahrzeugsitz 1 kann in z-Richtung aus der Bodenschiene 4 entnommen werden. Zwecks Entnahme des Sitzes 1 ist die Arretiereinheit und die Kontaktierungseinheit ebenfalls in der entriegelten bzw. gelösten Position. Die Verriegelungselemente 9, die Arretiereinheit 10 sowie die Kontaktierungseinheit wirken zwischen der Bodenschiene 4 und der Sitzschiene 5. Die Darstellung der Figur 4b zeigt wesentliche Elemente des Arretier- und Kontaktierungssystems ohne Sitz- und Bodenschiene.

Die Figur 5a zeigt in einem perspektivischen Ausschnitt eines Sitzschienenpaares 3 die Gebrauchsposition, in der der Kraftfahrzeugsitz 1 arretiert und kontaktiert gehalten ist. Der Ausschnitt zeigt die wesentlichen Bauteile der Arretier- und Kontaktierungseinheit 10 sowie einen Betätigungshebel 11, der mit dem ersten Betätigungselement 6 wirkverbunden gekoppelt ist und bei Betätigung in Richtung des Pfeils in Fig. 5a eine Einstellung in die Längsverstellposition bewirkt.

Die Arretier- und Kontaktierungseinheit 10 umfasst dabei im Wesentlichen paarweise in Längsrichtung um die Längsachse gespiegelt gegenüberliegend angeordnete Arretier- und Kontaktierelemente 12, 13. Ein Paar weist dabei jeweils ein in Längsrichtung benachbart angeordnetes Arretierelement 12 und Kontaktierelement 13 auf. Die Arretier- und Kontaktierelemente 12, 13 sind um eine in Längsrichtung ausgerichtete Achse 14 verschwenbar und federvorbelastet in Richtung auf die Bodenschiene an der im wesentlichen u-förmig ausgeführten Sitzschiene 5 gehalten. Auf der Rückseite der Arretierelemente 12 ist jeweils ein Mitnahmebügel 19 angebracht, der zylindrisch ausgeführt ist und bei einer Verschwenkbewegung des Arretierelementes 12 in Richtung auf die Nuten 16 nach einem kurzen Verschwenkweg das Kontaktierelement 13 mitnimmt. Der Mitnahmebügel 19 ist in den Figuren 5a, 5b nicht gezeigt. In der Gebrauchsposition, die in der Figur 5a dargestellt ist, greifen die Arretierelemente 12 mit einem Zahnprofil 15 in korrespondierende Nuten 16 der Bodenschiene formschlüssig ein. Durch diesen Formschluss wird eine Verschiebung in x-Richtung zwischen Sitzschiene 5 und Bodenschiene 4 blockiert. Aus den Zeichnungen kann man erkennen, dass die Nuten 16 in regelmäßigen Abständen verteilt längs der Seitenschenkel S der Bodenschiene 4 angeordnet sind. Hierdurch kann an jeder beliebigen Position längs der Bodenschiene 4 die Sitzschiene 5 arretiert werden. Die Kontaktierelemente 13 weisen ebenfalls an ihrem unteren Endbereich ein Zahnprofil 17 mit zwei Zähnen auf, die ebenfalls in die Nuten 16 eingreifen bzw. diese durchgreifen und auf einer in Längsrichtung verlaufenden Kontaktierungsschiene eine Kontaktierung über Kontaktstifte 18 bewirken. Die Kontaktstifte 18 sind stirnseitig in den in y Richtung sich erstreckenden Zähnen angeordnet. Die Zähne der Zahnprofile 15 und 17 haben die gleiche Teilung T.

Die Kontaktstifte 18 sind aus Kupfer ausgeführt. Selbstverständlich kann auch ein anderes elektrisch leitfähiges Material eingesetzt werden. Die Kontaktstifte 18 sind über entsprechende Kontaktierungselemente zur elektrischen Anbindung an die elektrischen Verbraucher des Kraftfahrzeugsitzes verbunden. Dies ist hier nicht dargestellt und wird auch nicht näher erläutert.

Die Kontaktierungsschiene ist zeichnerisch nicht dargestellt und ist fahrzeugstrukturfest an einem Bodenelement des Kraftfahrzeugs oder an der Bodenschiene 4 parallel verlaufend angeordnet. Da in Längsrichtung der Sitzschiene 5 beidseits Kontaktierungselemente 13 angeordnet sind, sind auch beidseits der Bodenschiene 4 Kontaktierungsschienen angeordnet. Die Kontaktierungsschienen weisen elektrisch leitfähige Streifen z.B. Kupferstreifen auf und stehen mit einer Bordnetzleitung des Bordnetzes des Kraftfahrzugs in Verbindung. Über die Bordnetzleitung können elektrischer Strom und/oder elektrische Signale übertragen werden. Die Bordnetzleitung sowie die Verbindung mit den Kupferstreifen sind zeichnerisch ebenfalls nicht dargestellt.

Die Arretier- und Kontaktierungseinheit 10 umfasst des Weiteren einen um eine in z-Richtung verlaufende Achse 20 verschwenkbar gelagerten Bolzen 21, der an dem Betätigungshebel 11 angebunden und bei Betätigung des Betätigungshebels 11 um seine Hochachse verschwenkt. Die Verdrehbewegung ist durch den Pfeil in Figur 5b gezeigt. Am unteren Endbereich des Bolzens 21 ist ein mittig durch den Bolzen 21 geführtes Mitnahmeelement 22 angeordnet, das beidseits radial nach außen geführte Mitnahmebügel 23 aufweist. Bei der Rotation des Bolzens 21 die durch die Betätigung des Betätigungselementes 6 durch einen Nutzer bewirkt wird, rotieren die Mitnahmebügel 23 ebenfalls mit und bewirken ein Verschwenken der Kontaktierungselemente 13 in eine Stellung zur Unterbrechung der elektrischen Verbindung. Durch das Verschwenken der Kontaktierungselemente 13 werden die Arretierelemente 12 mittels der Mitnahmebügel ebenfalls in eine Entriegelungsstellung verschwenkt. In der Entriegelungsstellung greifen die Zahnprofile 15 der Arretierelemente 12 nicht mehr formschlüssig in die Nuten 16 der Bodenschiene 4 ein, so dass sich der Sitz 1 in der Längsverstellposition befindet und der Nutzer den Sitz 1 längs der Bodenschienen 4 verschieben kann.

Nach dem Verstellen des Sitzes 1 und Lösen der Betätigung des Betätigungselementes 6 durch den Nutzer, verschwenkt das Betätigungselement 11 unter Rotation des Bolzens 21 wieder in die in der Figur 5a gezeigten Gebrauchsposition. Bei der Rotation des Bolzens 21 entgegen des Uhrzeigersinns, lösen sich die Mitnahmebügel von korrespondierenden Anschlagflächen an den Kontaktierelementen 12 und die Kontaktierelemente 13 und Arretierelemente 12 verschwenken aufgrund der Federvorspannung in die arretierte Position der Arretierelemente 12 und die Position der Kontaktierelemente 13 in der eine elektrische Verbindung zwischen Bodenschiene/ Bordnetz und Kraftfahrzeugsitz 1 hergestellt ist (Fig. 5a)

Die Figuren 6 und 7 zeigen in einer Draufsicht auf die Sitzschiene und in einer Seitenansicht auf eine Schienenpaar 3 den Kraftfahrzeugsitz 1 in der Gebrauchsposition d.h. arretiert in x-Richtung, in z-Richtung und kontaktiert. Die Anordnung der Arreterierelemente 12 und Kontaktierelemente 13 ist bereits zu der Figur 5a beschrieben. Aus der Darstellung der Figuren 6 und 7 kann man zusätzlich die Verriegelung in z-Richtung erkennen, die durch die Verriegelungselemente 9 erreicht wird. Die Verriegelungselemente 9 umfassen einen Bolzen 24 und einen Nutenstein 25. Der Nutenstein 25 ist derart dimensioniert, dass die Verriegelungselemente 9 beim Einsetzen des Kraftfahrzeugsitzes in einer ersten Position durch den Schlitz S geführt werden können (die Breite B1 der Nutensteine ist geringer als die lichte Weite des Schlitzes S) und in einer zweiten Position eine Verriegelung des Sitzes 1 in z-Richtung bewirken. In dieser Verriegelungsposition sind die Nutensteine 25 in y- Richtung verlaufend ausgerichtet und weisen eine Breite B2 auf, die größer ist als die lichte Weite des Schlitzes S. Die Verriegelungselemente 9 sind an ihrem oberen Endbereich an dem Bolzen 24 verschwenbar an einer Betätigungsschiene 26 angebunden. Die Betätigungsschiene 26 ist in der Sitzschiene 5 längsverschieblich gelagert und kann über das zweite Betätigungselement betätigt werden. Die Betätigung der Betätigungsschiene 26 durch eine Betätigung des Betätigungselements 7 durch einen Nutzer zum Einstellen des Sitzes in die Entnahmeposition ist in der Figur 8 durch den Pfeil dargestellt. Bei der Verschiebung der Betätigungsschiene 26 in Richtung des Pfeils rotieren die Verriegelungselemente 9 im Uhrzeigersinn in die erste Position. Wie es aus der Darstellung der Figuren zu erkennen ist, sind jeweils am vorderen Endbereich der Sitzschiene 5 und am hinteren Endbereich der Sitzschiene 5 zwei Verriegelungselemente 9 an der Betätigungsschiene angebunden.

Die Betätigungsschiene 26 weist des Weiteren im Bereich des Betätigungshebels 11 eine Nut 27 auf, in der der Betätigungshebel 11 über einen Stift 28 geführt gelagert ist. Aus den Zeichnungen Fig. 6 kann man erkennen, dass der Betätigungshebel in einer ersten Position ist, die der Gebrauchsposition des Sitzes 1 entspricht. Die Arretierelemente sind in der verriegelten Position und die Kontaktierelemente 13 sind kontaktiert. Bei der Verschiebebewegung in Richtung des Pfeils in Figur 8 zur Einstellung des Sitzes in die Entnahmeposition wird zusätzlich zu der Verstellung der Verriegelungselemente 9 wie obenstehend beschrieben eine Betätigung des Betätigungshebels 11 in die in Fig. 8 gezeigte Stellung bewirkt. Dies erfolgt über die Verschiebung der Betätigungsschiene und Verschiebung der Nut, so dass der Stift 28 an eine die Nut begrenzende Fläche die als Anschlag dient anschlägt und beim weiteren Verschieben der Betätigungsschiene ein Verschwenken des Betätigungshebels 11 um die Achse 20 erfolgt. Dieses Verschwenken bewirkt ein Lösen der Arretierelemente 12 aus der Bodenschiene 4 und ein Lösen der elektrischen Kontaktierung zwischen den Kontaktierelementen 13 bzw. Kontaktstiften 18. Dies ist zu den Figuren 5a und 5b im Einzelnen erläutert. In der in Figur 8 und 9 gezeigten Position ist der Sitz 1 in der Entnahmeposition, ist in z und x Richtung entriegelt und die Kontaktierung ist gelöst und kann von einem Nutzer aus den Bodenschienen entnommen werden.

Die Figuren 10a - 10d zeigen in mehreren Darstellungen und Ausschnitten den Anschlag zur Begrenzung der Verschwenkbewegung des Betätigungshebels 11. Dieser Anschlag 29 ist als rechteckige Ausnehmung 30 in dem Schenkel 5a ausgeführt. Die Figuren 10a bis 10c zeigen dabei die Position des Betätigungshebels 11 in der der Sitz 1 arretiert und kontaktiert ist (Gebrauchsposition). In dieser Position liegt der Betätigungshebel 11 auf der linken Seite der die Ausnehmung 30 begrenzenden Seitenwand 31 an. Die Verschwenkbewegung des Betätigungshebels 11 in die Entriegelungsposition der Arretierelemente 12 und Kontaktierelemente 13 wird durch die rechte Seitenwand 32 der Ausnehmung 30 begrenzt. Dies ist in der Figur 10d dargestellt.

In den Figuren 11a - 11e ist in mehreren Darstellungen und Ausschnitten die Begrenzung der Verschiebebewegung der Betätigungsschiene 26 bei Betätigung des Betätigungselements 7 gezeigt. Die Betätigungsrichtung bei Betätigung des Betätigungselements 7 zur Einstellung der Entnahmeposition ist durch den Pfeil in Figur 11a angezeigt. Hierfür weist die Betätigungsschiene 26 eine randseitig in z- Richtung senkrecht nach oben sich erstreckende Lasche 33 auf. In die Lasche 33 ist in Abhängigkeit des gewünschten Verschiebewegs eine Nut 34 mit entsprechender Abmessung eingebracht. An der Seitenschiene im Bereich der Innenseite des Schenkels 5a ist ein Anschlag in Form eines Stiftes 35 angeordnet. Der Stift 35 durchgreift die Nut 34.

Die Figuren 11b und 11d im Ausschnitt der Lasche zeigen die Gebrauchsposition des Sitzes. Hier liegt der Stift 35 auf der rechten Seite der die Nut 34 begrenzenden Innenfläche als Anschlag an. In den Figuren 11c und 11d im Ausschnitt der Lasche ist die Entnahmeposition des Sitzes 1 gezeigt. Hier liegt der Stift 35 auf der linken Seite der die Nut 34 begrenzenden Innenfläche an.

Die Figur 12 zeigt im Querschnitt in schematischer Darstellung die Situation beim Einsetzen des Sitzes 1 in die Bodenschiene 4. Das Einsetzen in die Bodenschiene 4 ist durch den Pfeil angezeigt. Beim Einsetzen in die Bodenschiene tauchen sowohl die Gleitelemente 8 als auch die Verriegelungselemente 9 zwischen den Einführschlitz in das u-Profil hinein. Die Verriegelungselemente 9 sind dabei in der entriegelten Position. Wie es weiterhin aus der Darstellung zu erkennen ist, liegt in dieser Situation ein Führungselement 36 auf den Führungsflächen 4c der Bodenschiene 4 auf. Das Führungselement 36 ist im Querschnitt rechteckig mit in y- Richtung auf der nach unten weisenden Seite abgeschrägten Kanten ausgeführt. Über einen in x-Richtung verlaufend angeordneten Hebel ist das Führungselement 36 um eine in y-Richtung verlaufende Achse verschwenkbar an der Sitzschiene anbgebunden.

Die Situation nach dem Einsetzen des Sitzes in die Bodenschiene, in der der Sitz sich in der Gebrauchsposition befindet, ist in der Figur 13 dargestellt. Hier ist zu ersehen, dass die Verriegelungselemente 9 in die verriegelte Position verschwenkt sind. Des Weiteren ist ersichtlich, dass das Führungselement 36 um die Achse nach oben verschwenkt ist und nicht mehr auf den Führungsflächen aufliegt.

In den Figuren 14 und 15 ist eine weitere Ausführungsform eines erfindungsgemäßen Arretier- und Kontaktierungssystems zum elektrischen Verbinden eines Bordnetzes eines Kraftfahrzeugs mit einem entnehmbaren Fahrzeugsitz oder einer Sitzanlage gezeigt. Gleiche zuvor beschriebene Bauteile sind mit den gleichen Bezugszeichen versehen und werden an dieser Stelle nicht näher beschrieben.

An der Sitzschiene 5 ist auf der zur Bodenschiene weisenden Seite des u-Profils anstelle von einzelnen Gleitelementen 8 eine Gleitschiene 8' angebunden. Diese Gleitschiene 8' umfasst einzelne Gleitabschnitte 37, die zur gleitenden Anlage in die Bodenschiene eingreifen. Des Weiteren ist die Gleitschiene 8' mit entsprechenden Ausnehmungen für die Verriegelungselemente 9 und die Arretier und Kontaktierelemente 12, 13 ausgeführt.

Im Unterschied zu dem zuvor beschriebenen Ausführungsbeispiel wird hier die Verstellbewegung zum Betätigen der Arretier- und Kontaktierelemente 12, 13 und der Verriegelungselelemente 9 über ein Zahnstangenantrieb 42, 43 bewirkt. Hierfür ist die Betätigungsschiene 26' an einem vorderen, hinteren und mittleren Abschnitt 40a, b, c in Form einer Zahnstange 41 ausgeführt. Die Verzahnungsabschnitte 40a, b, c sind dabei an einem Seitenbereich der Betätigungsschiene 26' angeordnet. Der vordere und hintere Verzahnungsabschnitt 40a, b, c sind hierbei den Verriegelungselementen 9 zugeordnet. Zwecks Verstellung der Verriegelungselemente 9 sind diese an ihrem oberen Endbereich der Bolzen 24 mit einem Zahnritzel 44 versehen. Die Zahnritzel 44 sind derart angeordnet, dass sie mit den zugeordneten Verzahnungabschnitten 40a, 40c in Wirkverbindung stehen und bei einer Längsverstellung der Betätigungsschiene 26' in x-Richtung die Zahnritzel mit den Verzahnungsabschnitten kämmen, so dass die translatorische Bewegung in eine rotatorische Bewegung umgewandelt wird und die Verriegelungselemente 9 um die Achse 24 in die verriegelte bzw. entriegelte Position verstellt werden können.

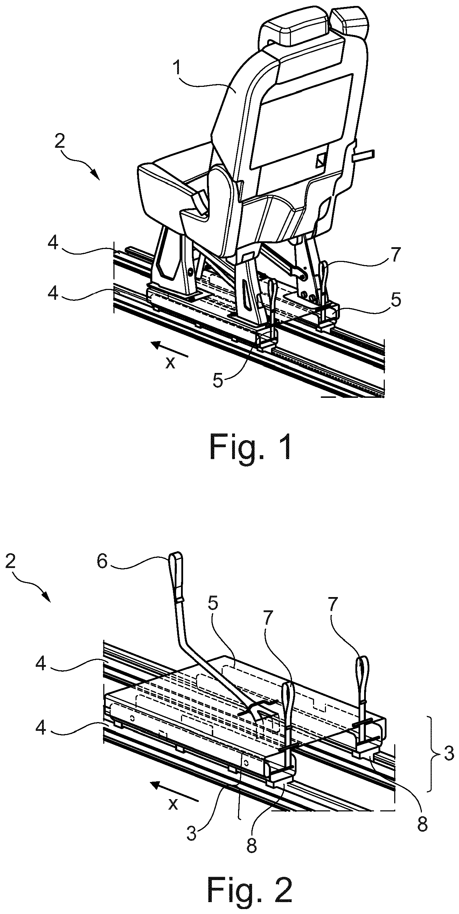

Die Verstellung der Arretier und Kontaktierelemente 13, 15 erfolgt ebenfalls über eine Verschiebung der Betätigungsschiene 26' entweder über den Betätigungshebel 6 oder über eine Betätigung des Betätigungshebels 7, 11. Hierfür ist an dem Bolzen 21' der an seinem unteren Endbereich die Mitnahmebügel 23 aufweist an dem gegenüberliegenden oberen Endbereich ebenfalls ein Zahnritzel 45 angeordnet. Die Zahnritzel 45 sind derart angeordnet, dass sie mit dem zugeordneten Verzahnungabschnitt 40b in Wirkverbindung stehen und bei einer Längsverstellung der Betätigungsschiene 26' in x-Richtung das Zahnritzel mit dem Verzahnungsabschnitt kämmt, so dass die translatorische Bewegung in eine rotatorische Bewegung umgewandelt wird und die Kontaktier- und Arretierelemente wie zu dem in den Figuren 1- 13 beschriebenen Ausführungsbeispiel bereits erläutert in die verriegelte/kontaktierte bzw. entriegelte/nicht kontaktierte Position verstellt werden können.

### Bezugszeichenliste

- 1: Kraftfahrzeugsitz
- 2: Schienensystem
- 3: Sitzschienenpaar
- 4: Bodenschiene
- 5: Sitzschiene
- 6: Erstes Betätigungselement
- 7: Zweite Betätigungselemente
- 8: Gleitelemente

- 8': Gleitschiene

- 9: Verriegelungselemente (z-Richtung)
- 10: Arretiereinheit und Kontaktierungseinheit
- 11: Betätigungshebel
- 12: Arretierelement
- 13: Kontaktierelement
- 14: Achse
- 15: Zahnprofil
- 16: Nuten
- 17: Zahnprofil
- 18: Kontaktstift
- 19: Mitnahmebügel
- 20: Achse
- 21: Bolzen; 21' Bolzen
- 22: Mitnahmeelement
- 23: Mitnahmebügel
- 24: Bolzen
- 25: Nutenstein
- 26: Betätigungsschiene; 26' Betätigungsschiene
- 27: Nut
- 28: Stift
- 29: Anschlag
- 30: Ausnehmung
- 31: Linke Seitenwand
- 32: Rechte Seitenwand
- 33: Lasche
- 34: Nut
- 35: Stift
- 36: Führungselement
- 37: Gleitabschnitte
- 40a, b, c: Verzahnungsabschnitte

- 42: Zahnstangenantrieb
- 43: Zahnstangenantrieb
- 44: Zahnritzel
- 45: Zahnritzel

- 30: Ausnehmung
- 31: Linke Seitenwand
- 32: Rechte Seitenwand
- 33: Lasche
- 34: Nut
- 35: Stift
- 36: Führungselement
- 37: Gleitabschnitte
- 40a, b, c: Verzahnungsabschnitte
- 42: Zahnstangenantrieb
- 43: Zahnstangenantrieb
- 44: Zahnritzel
- 45: Zahnritzel
- B1: Breite
- B2: Breite
- S: Einführschlitz
- T: Teilung

## Patentansprüche

1. Kraftfahrzeug mit Arretier- und Kontaktierungssystem zum elektrischen Verbinden eines Bordnetzes des Kraftfahrzeugs mit einem entnehmbaren Kraftfahrzeugsitz (1) oder einer Sitzanlage, wobei der Kraftfahrzeugsitz (1) mindestens eine an die Sitzstruktur angebundene Sitzschiene (5) umfasst, die über eine fahrzeugstrukturfest angebundene Bodenschiene (4) in Längsrichtung verschiebbar und arretierbar und aus den Bodenschienen (4) herausnehmbar gehalten ist, und einer in der Sitzschiene (5) verschiebbar gelagerten Betätigungsschiene (26, 26'), wobei die Betätigungsschiene (26, 26') über ein erstes und/oder zweites Betätigungselement (6, 7) verschiebbar ist, mit einer Arretier- und Kontaktierungseinheit (10), die in Wirkverbindung mit der Betätigungsschiene (26, 26') angeordnet ist, wobei eine Arretierung der Sitzschiene (5) in der Bodenschiene (4) in x-Richtung und eine elektrische Verbindung des Kraftfahrzeugsitzes (1) mit dem Bordnetz des Kraftfahrzeugs über die Arretier- und Kontaktierungseinheit (10) mittels einer Betätigung des ersten und/oder zweiten Betätigungselementes (6, 7) herstellbar bzw. aufhebbar ist, **dadurch gekennzeichnet, dass** die Arretier- und Kontaktierungseinheit (10) paarweise in Längsrichtung um eine Längsachse gespiegelt gegenüberliegend angeordnete Arretier- und Kontaktierelemente (12, 13) umfasst, wobei jedes Paar ein Arretier- und Kontaktierungselement (12, 13) umfasst, und wobei das Arretier- und Kontaktierelement (12, 13) in x-Richtung benachbart zueinander angeordnet sind und um eine in x-Richtung ausgerichtete Achse (14) verschwenkbar und federvorbelastet in Richtung auf die Bodenschiene (4) an der Sitzschiene (5) gehalten sind und bei Betätigung über das erste und /oder zweite Betätigungselement (6, 7) das mindestens eine Arretierelement (12) formschlüssig in die Bodenschiene (4) eingreift und über das mindestens eine Kontaktierelement (13) eine elektrische Verbindung zu einem Kontaktierungselement an der Bodenschiene (4) herstellbar ist, und dass auf der Rückseite des Arretierelementes (12) ein Mitnahmebügel (19) angebracht ist, der bei einer Verschwenkbewegung des Arretierelementes (12) in Richtung auf die Bodenschiene (4) nach einem kurzen Verschwenkweg das Kontaktierelement (13) zwecks Kontaktierung mitnimmt.

2. Kraftfahrzeug mit Arretier- und Kontaktierungssystem nach Anspruch 1, **dadurch gekennzeichnet, dass** die formschlüssige aufhebbare Verbindung zwischen dem mindestens einen Arretierelement (12) und der Bodenschiene (4) über ein Zahnprofil (15) welches in korrespondierende Nuten (16) der Bodenschiene (4) eingreift herstellbar ist.

3. Kraftfahrzeug mit Arretier- und Kontaktierungssystem nach Anspruch 1 oder 2, **dadurch gekennzeichnet, dass** die Sitzschiene (5) weiterhin Verriegelungselemente (9) zur Verriegelung des Kraftfahrzeugsitzes (1) in z-Richtung umfasst, die ebenfalls in Wirkverbindung mit der Betätigungsschiene (26) stehen und über das zweite Betätigungselement (7) betätigbar sind.

4. Kraftfahrzeug mit Arretier- und Kontaktierungssystem nach einem der vorangehenden Ansprüche, **dadurch gekennzeichnet, dass** die Verstellbewegung bzw. Wirkverbindung zwischen Betätigungsschiene (26') und Arretier- und Kontaktierelementen (12, 13) einen Zahnstangenantrieb (43) umfasst, wobei die Betätigungsschiene (26') an einem Abschnitt (40b) in Form einer Zahnstange ausgeführt ist, die mit einem Zahnritzel (45) der Arretier- und Kontaktierungseinheit (10) kämmt und eine Betätigung der Arretier- und Kontaktierelemente (12, 13) in die arretierte und kontaktierte Stellung und vice versa bewirkbar ist.

5. Kraftfahrzeug mit Arretier- und Kontaktierungssystem nach Anspruch 4, **dadurch gekennzeichnet, dass** die Verstellbewegung bzw. Wirkverbindung zwischen Betätigungsschiene (26') und Verriegelungselement (9) einen Zahnstangenantrieb (42) umfasst, wobei die Betätigungsschiene (26') an mindestens einem Abschnitt (40a, c) in Form einer Zahnstange ausgeführt ist, und dieser Abschnitt mit mindestens einem Zahnritzel (44) eines Verriegelungselementes (9) kämmt und eine Betätigung des mindestens einen Verriegelungselementes (9) in die verriegelte Stellung und vice versa bewirkbar ist.

6. Kraftfahrzeug mit Arretier- und Kontaktierungssystem nach einem der Ansprüche 1-3, **dadurch gekennzeichnet, dass** die Verstellbewegung bzw. Wirkverbindung zwischen Betätigungsschiene (26') und Arretier- und Kontaktierungseinheit (10) einen in z-Richtung verlaufenden verschwenkbar gelagerten Bolzen (21) umfasst, der an einem mit dem zweiten Betätigungselement (7) gekoppelten Betätigungshebel (11) angebunden ist, wobei bei Betätigung des Betätigungshebels (11) eine Rotation des Bolzens (21) um seine Hochachse bewirkt wird.

7. Kraftfahrzeug mit Arretier- und Kontaktierungssystem nach Anspruch 6, **dadurch gekennzeichnet, dass** zwischen Betätigungshebel (11) und Betätigungsschiene (26) eine Kulissenführung vorgesehen ist, wodurch bei Betätigung der Betätigungsschiene (26) ein Verschwenken des Betätigungshebels (11) bzw. Rotation des Bolzens (21) bewirkbar ist.

## Claims

1. Motor vehicle with locking and contacting system for the electrically connecting an on-board power supply network of the motor vehicle with a removable vehicle seat (1) or a seat system, wherein the motor vehicle seat (1) comprises at least one seat rail (5) which is attached to the seat structure and which is held so as to be displaceable and blockable in the longitudinal direction via a floor rail (4), which is attached to the vehicle structure, and so as to be removable from the floor rails (4), and an actuating rail (26, 26') which is displaceably mounted in the seat rail (5), wherein the actuating rail (26, 26') is displaceable via a first and/or second actuating element (6, 7) with a blocking and contact unit (10) which is arranged so as to be operatively connected to the actuating rail (26, 26'), wherein a blocking of the seat rail (5) in the floor rail (4) in the x-direction and an electrical connection of the motor vehicle seat (1) to the on-board power supply of the motor vehicle are able to be produced and/or released via the blocking and contact unit (10) by means of an actuation of the first and/or second actuating element (6, 7), **characterized in that** the blocking and contact unit (10) comprises blocking and contact elements (12, 13) which are opposingly arranged in pairs in the longitudinal direction so as to be mirrored about a longitudinal axis, wherein each pair comprises a blocking and contact element (12, 13) and wherein the blocking element and contact element (12, 13) are arranged adjacent to one another in the x-direction and are held on the seat rail (5) so as to be pivotable and spring-preloaded about an axis (14) which is oriented in the x-direction, in the direction of the floor rail (4), and when actuated via the first and/or second actuating element (6, 7) the at least one blocking element (12) positively engages in the floor rail (4) and, via the at least one contact element (13), an electrical connection is able to be produced with a contact element on the floor rail (4), and **in that** an entrainer yoke (19) is attached to the rear face of the blocking element (12) and, with a pivoting movement of the blocking element (12) in the direction of the floor rail (4) along a short pivoting path, said entrainer yoke entraining the contact element (13) for the purpose of contact.

2. Motor vehicle with locking and contacting system according to Claim 1, **characterized in that** the positively releasable connection between the at least one blocking element (12) and the floor rail (4) is able to be produced via a toothed profile (15) which engages in corresponding grooves (16) of the floor rail (4).

3. Motor vehicle with locking and contacting system according to Claim 1 or 2, **characterized in that** the seat rail (5) further comprises locking elements (9) for locking the motor vehicle seat (1) in the z-direction, said locking elements also being operatively connected to the actuating rail (26) and being able to be actuated via the second actuating element (7).

4. Motor vehicle with locking and contacting system according to one of the preceding claims, **characterized in that** the adjustment movement and/or operative connection between the actuating rail (26') and the blocking and contact elements (12, 13) comprises a toothed rod drive (43), wherein the actuating rail (26') is designed on a portion (40b) in the form of a toothed rod which meshes with a toothed pinion (45) of the blocking and contact element (10), and an actuation of the blocking and contact elements (12, 13) into the blocked and contact position, and vice-versa, is able to be effected.

5. Motor vehicle with locking and contacting system according to Claim 4, **characterized in that** the adjustment movement and/or operative connection between the actuating rail (26') and the locking element (9) comprises a toothed rod drive (42), wherein the actuating rail (26') on at least one portion (40a, c) is designed in the form of a toothed rod, and this portion meshes with at least one toothed pinion (44) of a locking element (9), and an actuation of the at least one locking element (9) into the locked position, and vice-versa, is able to be effected.

6. Motor vehicle with locking and contacting system according to one of Claims 1 - 3, **characterized in that** the adjustment movement and/or operative connection between the actuating rail (26') and the blocking and contact unit (10) comprises a pivotably mounted pivot pin (21) which runs in the z-direction and which is attached to an actuating lever (11) coupled to the second actuating element (7), wherein when actuating the actuating lever (11) a rotation of the pivot pin (21) about its vertical axis is effected.

7. Motor vehicle with locking and contacting system according to Claim 6, **characterized in that** a sliding guide is provided between the actuating lever (11) and the actuating rail (26), whereby when actuating the actuating rail (26) a pivoting of the actuating lever (11) and/or rotation of the pivot pin (21) is able to be effected.

## Revendications

1. Véhicule automobile comprenant un système de blocage et de contact permettant de raccorder électriquement un réseau de bord du véhicule automobile à un siège de véhicule automobile amovible (1) ou à une installation de siège, le siège de véhicule automobile (1) comprenant au moins un rail de siège (5) relié à la structure de siège, qui peut être déplacé et bloqué dans la direction longitudinale par l'intermédiaire d'un rail de plancher (4) relié solidement à la structure du véhicule et qui est maintenu de manière à pouvoir sortir des rails de plancher (4), et comprenant un rail d'actionnement (26, 26') monté mobile dans le rail de siège (5), le rail d'actionnement (26, 26') pouvant être déplacé par l'intermédiaire d'un premier et/ou d'un deuxième élément d'actionnement (6, 7), comprenant une unité de blocage et de contact (10) qui est disposée en relation active avec le rail d'actionnement (26, 26'), dans lequel un blocage du rail de siège (5) dans le rail de plancher (4) dans la direction x et un raccordement électrique du siège de véhicule automobile (1) au réseau de bord du véhicule automobile peuvent être établis ou supprimés par l'intermédiaire de l'unité de blocage et de contact (10) au moyen d'un actionnement du premier et/ou du deuxième élément d'actionnement (6, 7),
**caractérisé en ce que** l'unité de blocage et de contact (10) comprend des éléments de blocage et de contact (12, 13) disposés par paire dans la direction longitudinale, opposés en miroir autour d'un axe longitudinal, chaque paire comprenant un élément de blocage et un élément de contact (12, 13), et l'élément de blocage et l'élément de contact (12, 13) étant disposés de façon adjacente l'un à l'autre dans la direction x et étant maintenus sur le rail de siège (5) de manière à pouvoir pivoter autour d'un axe (14) orienté dans la direction x et de manière précontrainte par ressort en direction du rail de plancher (4), et lors d'un actionnement par l'intermédiaire du premier et/ou du deuxième élément d'actionnement (6, 7), ledit au moins un élément de blocage (12) vient en prise par complémentarité de forme dans le rail de plancher (4), et un raccordement électrique avec un élément de contact sur le rail de plancher (4) peut être établi par l'intermédiaire du au moins un élément de contact (13), et **en ce que** sur la face arrière de l'élément de blocage (12), un étrier d'entraînement (19) est installé qui, lors d'un pivotement de l'élément de blocage (12) en direction du rail de plancher (4), entraîne après une courte course de pivotement l'élément de contact (13) en vue d'une mise en contact.

2. Véhicule automobile comprenant un système de blocage et de contact selon la revendication 1, **caractérisé en ce que** le raccordement par complémentarité de forme amovible entre ledit au moins un élément de blocage (12) et le rail de plancher (4) peut être établi par l'intermédiaire d'un profile denté (15) qui vient en prise dans des rainures correspondantes (16) du rail de plancher (4).

3. Véhicule automobile comprenant un système de blocage et de contact selon la revendication 1 ou 2, **caractérisé en ce que** le rail de siège (5) comprend en outre des éléments de verrouillage (9) pour verrouiller le siège de véhicule automobile (1) dans la direction z qui se trouvent également en liaison active avec le rail d'actionnement (26) et peuvent être actionnés par l'intermédiaire du deuxième élément d'actionnement (7).

4. Véhicule automobile comprenant un système de blocage et de contact selon l'une quelconque des revendications précédentes, **caractérisé en ce que** le mouvement de réglage ou la relation active entre le rail d'actionnement (26') et les éléments de blocage et de contact (12, 13) comprend un entraînement par crémaillère (43), dans lequel le rail d'actionnement (26') est réalisé sur une partie (40b) sous la forme d'une crémaillère qui s'engrène avec un pignon (45) de l'unité de blocage et de contact (10), et un actionnement des éléments de blocage et de contact (12, 13) dans la position bloquée et en contact et vice versa peut être provoqué.

5. Véhicule automobile comprenant un système de blocage et de contact selon la revendication 4, **caractérisé en ce que** le mouvement de réglage ou la relation active entre le rail d'actionnement (26') et l'élément de verrouillage (9) comprend un entraînement par crémaillère (42), le rail d'actionnement (26') étant réalisé sur au moins une partie (40a, c) sous la forme d'une crémaillère, et cette partie s'engrène avec au moins un pignon (44) d'un élément de verrouillage (9), et un actionnement du au moins un élément de verrouillage (9) dans la position verrouillée et vice versa peut être provoqué.

6. Véhicule automobile comprenant un système de blocage et de contact selon l'une quelconque des revendications 1 à 3, **caractérisé en ce que** le mouvement de réglage ou la relation active entre le rail d'actionnement (26') et l'unité de blocage et de contact (10) comprend un boulon (21) monté pivotant, s'étendant dans la direction z, et qui est relié à un levier d'actionnement (11) couplé avec le deuxième élément d'actionnement (7), une rotation du boulon (21) autour de son axe vertical étant provoquée par l'actionnement du levier d'actionnement (11).

7. Véhicule automobile comprenant un système de blocage et de contact selon la revendication 6, **caractérisé en ce qu'**entre le levier d'actionnement (11) et le rail d'actionnement (26), un guide de coulisse est prévu de sorte qu'en cas d'actionnement du rail d'actionnement (26) un pivotement du levier d'actionnement (11) ou une rotation du boulon (21) peut être provoqué(e).
